# EUROPÄISCHE PATENTSCHRIFT

(11) **EP 1 635 974 B1**
(45) Veröffentlichungstag und Bekanntmachung des Hinweises auf die Patenterteilung: **03.10.2007**
(21) Anmeldenummer: 04738808.7
(22) Anmeldetag: 28.06.2004
(51) Int. Cl.: B23B 51/10

(54) **WERKZEUG ZUM ENTGRATEN**
TOOL FOR BURRING
OUTIL D'EBARBAGE

(30) Priorität: 27.06.2003 DE 10329187; 24.11.2003 DE 10355098
(43) Veröffentlichungstag der Anmeldung: 22.03.2006
(73) Patentinhaber: Gühring, Jörg, 72458 Albstadt (DE)
(72) Erfinder: GAISER, Gilbert, 71519 Veringendorf (DE)
(74) Vertreter: Dobler, Markus
(86) Internationale Anmeldenummer: PCT/DE2004/001362
(87) Internationale Veröffentlichungsnummer: WO 2005/000509

(56) Entgegenhaltungen:
- EP-A- 1 075 888
- WO-A-96/04091
- US-A- 3 442 162
- US-A- 3 449 984

## Beschreibung

Die Erfindung betrifft ein Werkzeug zum Entgraten von Bohrungen nach dem Oberbegriff des Anspruchs 1.

Zum beidseitigen Entgraten von Bohrungsanfang und Bohrungsende einer Bohrung ist es bekannt ein Werkzeug zu verwenden, das einen zylindrischen Grundkörper aufweist, der an einem Ende zwei Schneidenträger bzw. Federarme umfasst, die sich elastisch aufeinander zu bewegen können, wobei an den Federarmen jeweils ein Schneidelement angeordnet ist, das radial vorsteht und zwei Schneiden mit zwei Schneidkanten trägt, die jeweils im Winkel zu einer Ebene verlaufen, die senkrecht zur Werkzeugachse steht, und miteinander einen Winkel bilden. Ein solches Werkzeug wird beispielsweise von der Firma Scharmann unter dem Namen "BURR-ZIT" angeboten. Derartige Werkzeuge sind aus HSS-Stahl hergestellt. Nachteilig an den aus dem Stand der Technik bekannten Werkzeugen ist, dass diese insbesondere bei der Bearbeitung von Stahl einem relativ großen Verschleiß unterliegen und somit geringe Standzeiten aufweisen.

Die Druckschrift WO 96/04091 offenbart ein Werkzeug zum Entgraten von Bohrungen mit einem Grundkörper und einen eine Schneide aufweisenden Federarm, wobei lediglich die Schneide aus Hartmetall besteht.

Die Druckschrift US 3,442,162 offenbart ein Werkzeug zum Entgraten von Bohrungen mit einem Grundkörper, wobei wiederum lediglich die Schneide aus Hartmetall bzw. PKT besteht.

Nachteilig bei einem derartigen Werkzeug ist jedoch, dass dies vergleichsweise aufwendig hergestellt wird bzw. der Bearbeitungsdruck auf das zu bearbeitende Werkstück relativ gering ist.

Gegenüber diesem Stand der Technik hat die vorliegende Erfindung die Aufgabe, ein Werkzeug Vorzuschlagen, dass mit wenigen Fertigungsschritten herstellbar ist.

Diese Aufgabe wird, ausgehend von den Merkmalen des Oberbegriffs des Anspruchs 1, erfindungsgemäß durch die kennzeichnenden Merkmale des Anspruchs 1 gelöst. In den Unteransprüchen sind vorteilhafte und zweckmäßige Weiterbildungen angegeben.

Dementsprechend zeichnet sich ein erfindungsgemäßes Werkzeug dadurch aus, dass das Werkzeug vollständig aus Hartmetall besteht**.** Ein derartiges Werkzeug ist mit wenigen Fertigungsschritten herstellbar und erlaubt das Ausüben von noch größerem Druck auf das zu bearbeitende Werkstück, so dass die Leistungsfähigkeit des Schneidorgans voll ausnutzbar ist.

Grundsätzlich kann der Grundkörper des Werkzeugs gemäß der Erfindung z.B. einen runden, rechteckigen, sechseckigen oder sonstigen polygonförmigen Querschnitt aufweisen. Bevorzugt wird jedoch ein als zylindrischer Körper ausgebildeter Grundkörper verwendet.

Generell kann ein Schneidenträger vorgesehen werden, der einseitig am Grundkörper angeordnet ist und sein freies Ende im Wesentlichen federelastisch quer zur Drehachse bewegbar bzw. verstellbar ist. Ein einseitig am Grundkörper fixierter Schneidenträger kann beispielsweise als Kragarm bzw. Federarm ausgebildet werden. Durch die einseitige Lagerung mit einem frei federnden vorderen Ende ist es möglich, auch mit vergleichsweise kurzen Federarmen relativ große Amplituden im Bereich des Schneidenträgers zu verwirklichen und so auch bei der Verwendung steifer Materialen die gewünschten Federwege zu erreichen.

In einer alternativen Variante gemäß der Erfindung kann der Schneidenträger brückenartig an beiden Enden fixiert werden, wobei ein mittlerer Bereich des Schneidenträgers gegenüber dem Grundkörper federelastisch radial in Bezug auf die Längsachse des übrigen Grundkörpers nachgiebig ist. Bei entsprechend zweiseitig fixierten Schneidenträgern ist das Schneidelement in vorteilhafter Weise im mittleren Bereich eines solchen Brückenelements angeordnet.

In einer vorteilhaften Variante der Erfindung ist die Schneidenvorderkante wenigstens teilweise in Richtung eines Werkzeugkopfes, d.h. entgegen der zum Einspannende bzw. Schaft weisenden Richtung, ausgerichtet. Mit dieser Maßnahme wird gewährleistet, dass die Schneidenvorderkante beim Verstellen des Werkzeuges längs der Drehachse in Richtung zum Werkstück die Bohrung entgraten kann. Hiermit können unter anderem Sacklöcher vorteilhaft entgratet werden. Beispielsweise ist die Schneide in vorteilhafter Weise derart winklig und längs der Drehachse angeordnet, so dass die Schneidenvorderkante die Bohrung auf einer Seite des Werkstücks entgratet.

Alternativ oder in Kombination zur vorgenannten Variante ist bei einer besonderen Weiterbildung der Erfindung die Schneidenvorderkante wenigstens teilweise in Richtung des Einspannendes bzw. Schaftes ausgerichtet. Hiermit wird gewährleistet, dass ein Hinterschneiden der Bohrung bzw. des Werkstücks realisierbar ist. D.h., dass das Werkzeug wenigstens zum Teil durch die Bohrung hindurch geführt werden kann und insbesondere beim Zurückbewegen des Werkzeugs die Bohrung bzw. das Werkstück auf der Rückseite entgratet. Beispielsweise ist diese und/oder eine zweite Schneide in vorteilhafter Weise derart winklig und längs der Drehachse angeordnet, dass diese beim vollständigen Durchstoßen des Schneidelementes durch die Bohrung und insbesondere beim anschließenden Zurückziehen des Werkzeugs in Längsrichtung der Drehachse ein Entgraten des Werkstücks auf der Rückseite ermöglicht.

Bei einer besonderen Ausführungsform der Erfindung, bei welcher wenigstens eine Schneidenvorderkante wenigstens teilweise in Richtung des Schaftes und mindestens eine wenigstens teilweise entgegen der Richtung des Schaftes ausgerichtet sind, kann somit sowohl die Vorderseite als auch die Rückseite des Werkstücks entgratet werden.

Vorteilhafterweise kann das Werkzeug mit wenigstens zwei Schneidenträgern ausgestattet werden. In einer besonderen Variante der Erfindung werden die Schneidenträgern am Schaft gelagert und im Bereich ihrer vorderen Enden miteinander verbunden. Hierdurch erfolgt eine Stabilisierung des Werkzeugs im Hinblick auf hohe Belastungen, die z.B. auch durch unsachgemäße Benutzung auftreten können. Jeder Schneidenträger bildet eine Art zweiseitig gelagerte Brücke bzw. ein zweiseitig gelagertes elastisches Element. Durch die Kopplung der Schneidenträger im Bereich ihrer vorderen Enden dämpfen sich diese gegenseitig.

Vorzugsweise sind die Schneidenträger in dem Bereich, in welchem sie miteinander verbunden sind, einstückig ausgebildet. Es ist jedoch auch möglich einen Verbindungssteg einzulöten, einzuschweißen oder einzukleben. Diese Konstruktionen erlauben eine vereinfachte Fertigung des Werkzeugs bzw. Materialkombinationen.

Generell kann das Werkzeug gemäß der Erfindung einen einzigen Schneidenträger mit einem Schneidelement als auch mehrere Schneidenträger jeweils mit einem Schneidelement aufweisen. Vorzugsweise sind zwei Schneidenträger mit je einem Schneidelement vorgesehen, wobei die Schneidelemente im Wesentlichen auf gegenüberliegenden Seiten des Werkzeugs, gegebenenfalls im Schnitt betrachtet diametral gegenüberliegend angeordnet sind. Bevorzugt sind die beiden Schneidenträger so voneinander beabstandet, dass in vorteilhafter Weise eine überwiegend radiale Bewegung bzw. Verstellung der Schneidenträger bzw. Schneidelementes realisierbar ist. Beispielsweise sind die Schneidenträger mittels einer Ausnehmung voneinander beabstandet, wobei die Ausnehmung vorzugsweise im Bereich der Drehachse bzw. im mittleren Bereich des Werkzeugs bezogen auf den Querschnitt angeordnet ist. Auch können für bestimmte Anwendungsfälle außermittig angeordnete Ausnehmungen oder dergleichen von Vorteil sein. Dies ist insbesondere bei Werkzeugen für größere Bohrungsdurchmesser, z.B. größer von ungefähr 10 mm vorteilhaft. Hierbei kann auch bei diesen Durchmessern die vorteilhafte Elastizität des/der Schneidenträger gewährleistet werden.

Darüber hinaus kann eine quer zur Drehachse weitgehend geradlinig ausgebildete Ausnehmung oder eine abgewinkelt ausgebildete Ausnehmung vorgesehen werden. Mit einer abgewinkelten Ausnehmung, die z.B. in Längsrichtung des Werkzeugs betrachtet V, L-förmig ist, kann ein Querschnitt eines Schneidenträgers erzeugt werden, der von einem Kreisabschnitt abweicht, was für bestimmte Anwendungsfälle vorteilhaft ist.

Ein besonders ruhiger Lauf des Werkzeugs wird erzielt, wenn das Werkzeug insbesondere drei Schneidenträger bzw. Federarme aufweist und vorzugsweise jeder Schneidenträger bzw. Federarm ein Schneidelement bzw. Schneidorgan trägt, da dann die Belastung gleichmäßig auf den Umfang des Werkzeugs verteilt ist.

Grundsätzlich können gemäß der Erfindung auch ein oder mehrere Schneidenträger mit jeweils einem Schneidelement in Kombination mit wenigstens einem Arm oder dergleichen ohne Schneidelement vorgesehen werden. Beispielsweise ist ein Schneidenträger mit Schneidelement und ein Arm bzw. Träger ohne Schneidelement vorgesehen, die in vorteilhafter Weise voneinander beabstandet sind.

Vorzugsweise sind die Schneidenträger mit jeweils einem Schneidelement radial symmetrisch angeordnet, so dass eine besonders gleichmäßige Beanspruchung der Schneidelemente bzw. der Schneidenkanten realisierbar ist. Beispielsweise sind drei Schneidenträger mit jeweils einem Schneidelement vorgesehen, wobei die Schneidelemente bzw. die Schneidenvorderkanten der Schneidelemente etwa im Winkel von 120 Grad bezogen auf die Drehachse zueinander angeordnet sind.

Generell kann das Schneidelement als separates Schneidelement am Schneidenträger angeordnet bzw. fixiert werden. Andererseits kann das Schneidelement als Ausformung des Schneidenträgers und/oder das Schneidorgan einstückig mit dem Schneidenträger ausgebildet werden.

Eine vorteilhafte Ausbildung des Erfindungsgegenstandes sieht vor, das Werkzeug, das vorliegend auch mit Entgratgabel bezeichnet ist, mit einem radial vorstehenden Schneidelement zu versehen, das eine umfänglich verlaufende Mantelfläche besitzt, die bezogen auf die Längsachse der Entgratgabel im Schnitt senkrecht zur Werkzeuglängserstreckung einen geraden oder spiralähnlichen Verlauf aufweist, wobei der Radius zwischen Längsachse und Mantelfläche bzw. der Tangentenwinkel an die Mantelfläche entgegen der Drehrichtung der Entgratgabel kontinuierlich zunimmt. Hierdurch ist ein sanftes Einfedern der mit dem Schneidelement, das auch als Schneidorgan bezeichnet ist, bestückten Zinke der Entgratgabel beim vollständigen Eintreten des Schneidorgans in eine Bohrung möglich, so dass eine schlagartige das Hartmetall überbelastende Bewegung der Zinke zur Längsachse hin vermieden ist.

Weiterhin sehen Ausführungsformen der Erfindung vor, die Schneiden mit einem negativen oder positiven Spanwinkel zu versehen. Hierdurch entsteht eine Schneide bzw. Schneidkante, bei welcher nicht die Gefahr besteht, dass sich diese in das zu bearbeitende Werkstück einfrisst bzw. diese einen unruhigen Lauf hat.

Vorteilhafterweise ist, die speziell ausgebildete Mantelfläche zwischen den Schneiden angeordnet. Hierdurch entfaltet die Mantelfläche ihrer Wirkung sowohl beim Eintauchen der Entgratgabel in das Werkstück nach dem Entgraten mit der ersten Schneide als auch beim Herausziehen der Entgratgabel aus dem Werkzeug nach dem Entgraten mit der zweiten Schneide.

Es ist vorteilhaft, wenn die Mantelfläche zumindest teilweise annähernd parallel zur Werkzeugachse ausgerichtet ist. Hierdurch ist gewährleistet, dass das Einfedern der mit dem Schneidkörper besetzten Zinke beim Eintauchen und beim Herausziehen etwa vergleichbare Belastungen der Entgratgabel bewirkt.' Ebenso führt die Mantelfläche bei etwas ovalen Bohrungen zu einem sanften Ein- und Ausfedern bzw. Schwingen des Schneidenträgers bzw. Federarms während der Drehung.

Weiterhin ist es vorteilhaft, wenn die Schneiden einen zumindest ungefähr gleichen, jedoch entgegengesetzten Winkel zur Achse des Werkzeugs einschließen. Hierdurch ist ebenfalls eine vergleichbare Belastung der Entgratgabel beim Eintauchen und Herausziehen bewirkt. Weiterhin ist hierdurch eine gleichmäßige Abnutzung der beiden Scheiden gewährleistet.

Es ist insbesondere vorgesehen, die Winkel, welche die Schneiden zur Längsachse des Werkzeugs aufweisen in einem Bereich von 10° bis 65° auszubilden und insbesondere mit 20° - 40° vorzusehen.

Erfindungsgemäß wird weiter vorgeschlagen, am Schneidelement z.B. Schneiden auszubilden, welche einen Freiwinkel aufweisen, welcher etwa im Bereich von 2° bis 12° liegt. Hierdurch ist verhindert, dass die Freifläche beim Abschälen eines relativ starken Spans am Werkstück reibt.

Eine vorteilhafte Ausführung des Erfindungsgegenstandes sieht vor, am Werkzeug zwei Federarme auszubilden. Bei einer derartigen Ausbildung weisen auch Werkzeuge für kleinere Bohrungsdurchmesser auf dem jeweiligen Federarm ausreichend Platz für die Anordnung eines Schneidkörpers auf.

Eine Modifikation des Erfindungsgegenstandes sieht wenigstens drei Federarme vor, welche zumindest teilweise ein Schneidorgan aufweisen. Hierdurch ist es insbesondere bei größeren Bohrungsdurchmessern, etwa > 5 mm, möglich die Schneidarbeit auf mehrere Schneiden zu verteilen und somit die Belastung der einzelnen Schneide zu verringern, um eine möglichst hohe Lebensdauer des Werkzeugs zu erreichen.

Vorteilhafterweise ist wenigstens eine Kühlvorrichtung zum Kühlen des Werkzeugs vorgesehen. Mit Hilfe dieser Maßnahme ist eine nachteilige Erwärmung des Werkzeugs aufgrund des Bearbeitens der Bohrung bzw. des Werkstücks in vorteilhafter Weise minimierbar bzw. vollständig zu verhindern. Vorzugsweise umfasst die Kühlvorrichtung ein Kühlfluid wie z.B. eine Kühlflüssigkeit und/oder eine Kühlluft, die zur Kühlung des Werkzeugs und insbesondere zur Kühlung des/der Schneidelemente bzw. des/der Schneidenträger verwendet wird.

Vorzugsweise weist das Werkzeug eine Zufuhrvorrichtung zum Zuführen des Kühlfluids zu dem bzw. den Schneidenträgern und/oder dem/den Schneidelementen auf. Vorzugsweise weist die Zuführvorrichtung eine Kühlleitung auf. In einer besonderen Weiterbildung der Erfindung umfasst die Kühlleitung der Kühlvorrichtung im Bereich des Schneidelementes wenigstens eine Austrittsöffnung. Hiermit wird in vorteilhafter Weise die Kühlung des/der Schneidelemente realisierbar. Beispielsweise tritt aus der Austrittsöffnung das vorteilhafte Kühlfluid aus, so dass eine präzise Kühlung des Werkzeugs am Ort der durch den Schneidvorgang erwärmten Bereiche möglich ist.

Vorteilhafterweise ist die Kühlleitung als Kühlkanal ausgebildet. Ein entsprechend zumindest teilweise offen ausgebildeter Kühlkanal ermöglicht eine besonders einfache Herstellung der erfindungsgemäßen Zuführvorrichtung für das Kühlfluid.

Eine besonders wirksame Kühlung des Werkzeugs im Bereich der Schneidkanten ist durch einen zentralen Kühlkanal erreichbar, welcher im Bereich des Schafts parallel zur Längsachse des Werkzeugs verläuft und zwischen den Federarmen in den Schlitz mündet.

Eine vorteilhafte Ausführungsvariante des Erfindungsgegenstandes sieht vor, in wenigstens einem Federarm einen Kühlkanal anzuordnen. Hierdurch ist eine weitere Erhöhung der Schneidleistung und somit der Arbeitsgeschwindigkeit des Werkzeugs möglich.

Eine besondere Ausführungsvariante des Erfindungsgegenstandes sieht vor, die Kühlleitung mit einer im Bereich der Schneiden liegenden Austrittsöffnung zu versehen. Hierdurch kann das Kühlmedium zielgerichtet zugeführt werden.

Weiterhin sieht eine besondere Variante der Erfindung vor, zur Herstellung des Werkzeugs Hartmetalle der Klasse K20 bzw. K40 gemäß der ISO 513 zu verwenden. Dies sind insbesondere Hartmetalle mit einer Korngröße von 0,5 bis 0,7 µm und einer minimalen Biegefestigkeit von etwa 3200 bis 3700 MPa. Durch die Verwendung derartiger Stoffe ist ein Einfedern des oder der Federarme ohne eine Beschädigung des Werkzeugs möglich.

Vorzugsweise wird die Herstellung der Mantelfläche des Schneidorgans mittels eines Pendelschleifverfahrens realisiert. Dies erlaubt insbesondere die maßgenaue Herstellung von Schneidorganen an Werkzeugen für Bohrungsdurchmesser < 10 mm.

Eine spezielle Ausführung des Erfindungsgegenstandes sieht vor, wenigstens der/die Schneidenträger bzw. die Spitze des Werkzeugs mit einer Hartstoffschicht zu ummanteln. Hierdurch kann deren Verschleißfestigkeit auf einfache Weise erhöht werden.

Für die Hartstoffschicht kommt neben Diamant, auch beispielsweise Titan-Nitrid oder Titan-Aluminium-Nitrid in Frage. Besonders geeignet sind u.a. eine Titan-Aluminium-Nitrid-Schicht und eine sogenannte Mehrlagen-Schicht, die unter der Bezeichnung "Fire I" von der Firma Gühring oHG vermarktet wird. Dabei handelt es sich um eine TiN-/(Ti, Al) N-Mehrlagen-Schicht.

Besonders bevorzugt kann auch eine Verschleißschutzschicht zur Anwendung kommen, die im Wesentlichen aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht. Dabei kann der Schichtaufbau einlagig sein mit einer homogenen Mischphase oder er kann aus mehreren in sich homogenen Lagen bestehen, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

Gemäß einer Ausführungsvariante ist es vorgesehen, das Werkzeug rechts- und/oder linksscheidend auszuführen. Mit einem derartigen Werkzeug ist es möglich die Fertigung ohne Werkzeugwechsel fortzusetzen, wenn ein Werkzeugverschleiß festgestellt wird. Hierzu ist lediglich die Drehrichtung des Werkzeugs zu ändern. Somit sind mit derartigen Werkzeugen besonders hohe Standzeiten erreichbar.

Im Hinblick auf eine einfache Herstellung des Werkzeugs ist es besonders vorteilhaft, an dem Werkzeug ein rechtsscheidendes und ein linksscheidendes Schneidelement, das auch als Scheidorgan bezeichnet ist, vorzusehen.

Weiterhin ist es vorgesehen, das Werkzeug mit einem Schneidorgan auszustatten, das sowohl rechtsschneidende als auch linksscheidendende Eigenschaften aufweist. Ein derartiges Werkzeug ist besonders kompakt aufgebaut.

Es ist besonders vorteilhaft, wenn die Schneidenvorderkante schräg oder wendelförmig zur Längsachse des Werkzeugs auf dem Federarm angeordnet ist. Hierdurch ist eine besonders gute Führung des Werkzeugs in der Bohrung und ein besonders ruhiger Lauf des Werkzeugs erreichbar.

Weiterhin wird in vorteilhafter Weise vorgesehen, den Übergang von einer Mantelfläche des Federarms in eine Stirnfläche des Federarms mit einer Fase zu versehen und/oder diesen über einen Radius von insbesondere 0,1 mm bis 100 mm auszubilden. Hierdurch wird ein sanftes Eintauchen des Werkzeugs in die zu bearbeitende Bohrung ermöglicht.

Eine besondere Weiterbildung der Erfindung sieht vor, wenigstens einen der Schneidenträger bzw. Federarme mit seinem freien Ende in Vorschubrichtung zu orientieren. Ein derartig ausgebildetes Werkzeug erlaubt z. B. auch das Entgraten von flachen Sacklöchern, da das oder die Schneidelemente bzw. Schneidorgane im Bereich der Spitze bzw. des vorderen Endes des Werkzeugs angeordnet sind.

Eine insbesondere zur vorgenannten Weiterbildung alternativer Ausführungsform der Erfindung sieht vor, wenigstens einen der Federarme mit seinem freien Ende in Richtung des Schaftes zu orientieren. Ein derartig ausgebildetes Werkzeug ist besonders unempfindlich gegenüber ungewünschten Belastungen an der Spitze, da die freien Enden der Federarme gegenüber dieser zurückversetzt sind.

Vorteilhafterweise ist ein Verbindungsstück zum Verbinden wenigstens zweier Schneidenträger bzw. Federarme vorgesehen, das z.B. als Schraube oder Gewindestift, etc. ausgebildet ist. Hierdurch besteht die Möglichkeit durch ein stärkeres oder ein lockereres Verspannen der freien Enden der Schneidenträger bzw. Federarme auf den Wirkdurchmesser des Werkzeugs Einfluss zu nehmen und das Werkzeug zu justieren bzw. bei Bedarf nachzustellen.

Bei einem Werkzeug nach dem Oberbegriff des Anspruchs 1 sind vorteilhafterweise mindestens zwei für die Drehrichtung ausgebildete Schneidenvorderkanten des Schneidelements wenigstens teilweise in Drehrichtung hintereinander angeordnet. Auch diese Ausführungsform löst die erfindungsgemäß Aufgabe in vorteilhafter Weise. Darüber hinaus kann diese Variante beliebig mit den zuvor oder nachfolgend genannten Ausführungen kombiniert werden.

Mit Hilfe der erfindungsgemäßen Anordnung von mindestens zwei Schneiden in Drehrichtung und zughöriger Schneidenvorderkante am Schneidelement wird in vorteilhafter Weise die Beanspruchung der Schneidenvorderkanten während einem Entgratvorgang verringert, so dass sich die Standzeit des Werkzeugs gegenüber dem Stand der Technik entscheidend erhöht.

Beim Stand der Technik sind die zwei Schneiden winklig und längs der Drehachse angeordnet, so dass jeweils eine Schneidenvorderkante die Bohrung auf einer Seite des Werkstücks entgratet. Die erste Schneide entgratet beim Eintauchen in die Bohrung. Die zweite Schneide ist dafür vorgesehen und entsprechend angeordnet, dass diese beim vollständigen Durchstoßen des Schneidelementes durch die Bohrung und dem anschließenden Zurückziehen des Werkzeugs in Längsrichtung der Drehachse ein Entgraten des Werkstücks auf einer Rückseite des Werkstücks ermöglicht.

Bei dieser Erfindungsvariante kommt es darauf nicht an, da auch Anwendungsfälle mit umschlossen sein sollen, bei welchen nur eine Seite des Werkstücks bzw. die Bohrung zum Beispiel nur auf der Rückseite zu entgraten ist. Dabei wird mit der erfindungsgemäßen Anordnung der Schneidenvorderkanten eine gleichmäßige Beanspruchung bei jedem Entgratvorgang gewährleistet. Entgegen dem Stand der Technik wird eine punktuelle Belastung am Umfang, unabhängig vom Entgratvorgang auf der Vorder- und/oder Rückseite eines Werkstücks vermieden.

In einer vorteilhaften Variante der Erfindung sind Schneidenvorderkanten wenigstens teilweise in Richtung eines Werkzeugkopfes, d.h. entgegen der zum Einspannende bzw. Schaft weisenden Richtung, ausgerichtet. Mit dieser Maßnahme wird gewährleistet, dass die Schneidenvorderkanten beim Verstellen des Werkzeuges längs der Drehachse in Richtung zum Werkstück die Bohrung entgraten kann.

Alternativ oder in Kombination zur vorgenannten Variante sind bei einer besonderen Weiterbildung der Erfindung Schneidenvorderkanten wenigstens teilweise in Richtung des Einspannendes bzw. Schaftes ausgerichtet. Hiermit wird gewährleistet, dass ein Hinterschneiden der Bohrung bzw. des Werkstücks realisierbar ist. D.h., dass das Werkzeug wenigstens zum Teil durch die Bohrung hindurch geführt werden kann und insbesondere beim Zurückbewegen des Werkzeugs die Bohrung bzw. das Werkstück auf der Rückseite entgratet.

Bei einer besonderen Ausführungsform der Erfindung, bei welcher Schneidenvorderkanten wenigstens teilweise in Richtung des Schaftes und wenigstens teilweise entgegen der Richtung des Schaftes ausgerichtet sind, sind erfindungsgemäß mindestens vier Schneidenvorderkanten vorgesehen. D.h. wenigstens zwei Schneidenvorderkanten zeigen in und zwei Schneidenvorderkanten zeigen entgegen der Richtung des Schaftes. Ein entsprechend vorteilhaftes Werkzeug kann somit sowohl die Vorderseite als auch die Rückseite des Werkstücks entgraten.

Vorteilhafterweise ist mindestens ein Schneidabschnitt einer der Schneidenvorderkanten wenigstens teilweise längs der Drehrichtung ausgerichtet. Hiermit wird gewährleistet, dass bei einem Verstellen bzw. Bewegen des Werkzeugs in Richtung der Drehachse ein Schneiden bzw. Entgraten des Werkstücks bzw. der Bohrung vorteilhafterweise möglich ist.

Gegebenenfalls ist der Schneidabschnitt im Wesentlichen längs der Drehrichtung ausgerichtet. Bei dieser Variante der Erfindung sind somit Schneidabschnitte längs der Schneidrichtung als auch quer zur Schneidrichtung vorzusehen.

In einer bevorzugten Ausführungsform der Erfindung sind Schneidenvorderkanten im Wesentlichen in einem spitzen Schneidwinkel zur Drehrichtung ausgerichtet. Beispielsweise sind teilweise wellenförmig und/oder geradlinig ausgebildete Schneidenvorderkanten vorgesehen, die schräg bzw. wendelförmig zur Drehachse verlaufen.

Vorteilhafterweise ist ein sich kreuzender Verlauf der Schneiden für eine Bearbeitungsrichtung mit insbesondere jeweils mehreren Schneiden vorgesehen. Entsprechend sich kreuzende Schneiden können besonders einfach mit bereits bekannten Verfahren hergestellt werden. Die sich kreuzende Schneiden erzeugen beispielsweise ein Rechteck- oder Rautenmuster.

In einer vorteilhaften Ausführungsform der Erfindung sind Schneidenvorderkanten wenigstens teilweise auf einem gebogenen Mantelabschnitt des Schneidelementes angeordnet. Beispielsweise kann der Mantelabschnitt derart gebogen bzw. gewölbt ausgebildet werden, dass sich die Schneidenvorderkanten in vorteilhafter Weise über einen radialen Abstand zur Drehachse erstrecken, so dass Ungleichmäßigkeiten bzw. eine Unrundheit der Bohrung zu keiner Beeinträchtigung des Entgratens und/oder zu einer Verbesserung der Rundheit der Bohrung führen kann. Dies ist insbesondere bei Graten von Vorteil, die bezogen auf den Radius zur Bohrungsmitte ungleichmäßig ausgebildet sind. Entsprechende unrunde Grate werden gemäß der Erfindung in vorteilhafterweise leicht entfernbar. Die Wölbung kann außerdem entlang der Werkzeuglängserstreckung ausgebildet sein, um damit Abschnitte für das Entgraten einer Vorder- und Rückseite zu schaffen. Beispielsweise steigt die Wölbung in der Werkzeuglängserstreckung an bis zu einem Gleitbereich, der weiter unten noch detaillierter beschrieben ist und fällt dann nach diesem wieder ab.

In einer bevorzugten Variante der Erfindung sind eine Vielzahl von wenigstens teilweise in Drehrichtung hintereinander angeordneten Schneidenvorderkanten vorgesehen. Mit Hilfe dieser Maßnahme wird gewährleistet, dass sich die Standzeit des Werkzeugs noch weiter deutlich verbessern lässt. Beispielsweise sind mehr als zehn in Drehrichtung hintereinander angeordnete Schneidkanten vorgesehen.

In einer vorteilhaften Ausführungsform der Erfindung sind eine Vielzahl von wenigstens teilweise quer zur Drehrichtung hintereinander angeordneten Schneidenvorderkanten vorgesehen. Hiermit wird ermöglicht, dass die Beanspruchung bzw. die Abnutzung der Schneidenvorderkanten bzw. entsprechender Schneidabschnitte beim Verstellen bzw. Bewegen des Werkzeugs in Richtung der Drehachse verringert wird bzw. sich auf die zahlreichen Schneidenvorderkanten verteilt. Entsprechend wird die Wirkung und die Standzeit auch für kombinierte Bewegungen des Werkzeugs während eines Entgratvorgangs verbessert.

Vorteilhafterweise ist ein radial in Bezug auf die Drehachse hervorstehender Gleitbereich des Schneidelementes zum Gleiten in der Bohrung vorgesehen. Ein entsprechender Gleitbereich verhindert eine Beeinträchtigung der Bohrung im Werkstück durch das Eindringen des Werkzeugs. Der Gleitbereich weist in vorteilhafter Weise keine Schneidkanten auf.

Vorzugsweise ist der Gleitbereich zwischen zwei gebogenen, Schneidenvorderkanten aufweisenden Mantelabschnitten angeordnet. Die beiden durch den Gleitbereich z.B. voneinander beabstandeten Mantelabschnitte sind in vorteilhafter Weise derart auszubilden, dass ein Mantelabschnitt wenigstens teilweise in Richtung des Schafts und ein Mantelabschnitt entgegen der Richtung zum Schaft ausgerichtet ist. D.h., dass ein Mantelabschnitt zum Entgraten der Bohrung auf der Vorderseite des Werkstücks und ein Mantelabschnitt zum Entgraten der Bohrung auf der Rückseite des Werkstücks vorgesehen ist.

Weitere Einzelheiten der Erfindung werden in der Zeichnung anhand von schematisch dargestellten Ausführungsbeispielen beschrieben.

Hierbei zeigt:
- Figur 1a:: einen schematischen Querschnitt eines erfindungsgemäßen Werkzeugs,
- Figur 1b:: eine Detailansicht des in der Figur 1a gezeigten Werkzeugs,
- Figur 1c:: eine schematische Stirnseitenansicht aus einer Pfeilrichtung Ic auf das in der Figur 1a gezeigte Werkzeug,
- Figur 1d:: einen Querschnitt durch das in der Figur 1b gezeigte Werkzeug entlang der Schnittlinie Id-Id,
- Figur 2:: eine schematische Stirnseitenansicht eines weiteren Werkzeugs,
- Figur 3:: eine Draufsicht auf ein Werkzeug im Bereich des Schneidelements,
- Figur 4:: ein schematischer Längsschnitt eines Werkzeugs mit einem Federarm,
- Figur 5:: ein schematischer Längsschnitt eines weiteren Werkzeugs mit einem Federarm,
- Figur 6a -6c:: ein Werkzeug, bei welchem Schneidenträger durch einen Steg verbunden sind,
- Figur 7a - 7c:: ein Werkzeug mit drei Federarmen und einem zentralen Kühlkanal,
- Figur 8a - 8b:: ein Werkzeug mit abgerundeten Schneidorganen,
- Figur 9a - 9b:: ein Werkzeug mit zwei Federarmen und einem Schneidorgan,
- Figur 10:: einen Längsschnitt eines Werkzeugs mit zwei Federarmen, deren frei Enden in Richtung des Schafts weisen,
- Figur 11a - 11c:: ein weiteres Werkzeug mit zwei Federarmen und einem Schneidorgan,
- Figur 12a- 12b:: schematische Teilansichten zweier Werkzeuge mit Steckverbindungen,
- Figur 13:: eine schematische Teilansicht eines Werkzeugs, dessen Federarme mittels einer Schraube verspannt sind,
- Figur 14a- 14c:: ein schematisches Werkzeug mit auf gebogenen Mantelabschnitten des Schneidelements angeordneten Schneidenvorderkanten,
- Figur 15a- 15d:: schematische Varianten der Anordnung einer Vielzahl von Schneidenvorderkanten und
- Figur 16:: eine weitere, schematische Variante des Werkzeugs gemäß der Erfindung mit einem außermittig angeordnetem Schlitz zwischen einem Schneidenträger und einem Arm.

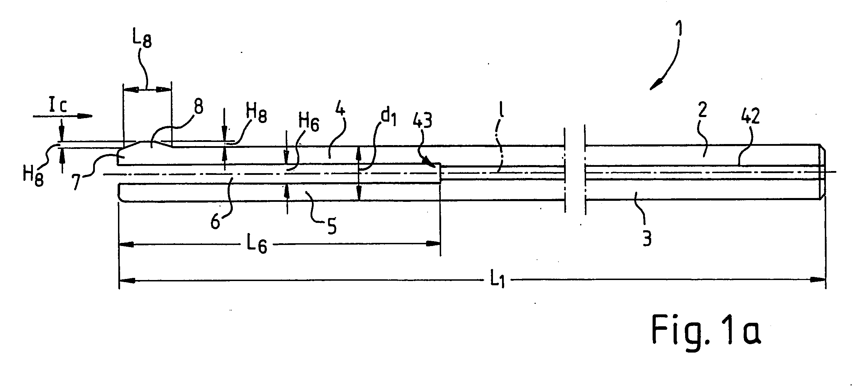

In der Figur 1a ist ein Werkzeug 1 im Längsschnitt dargestellt. Das Werkzeug 1 besteht im Wesentlichen aus einem zylindrischen Körper 2, welcher in einen ersten Bereich als Schaft 3 ausgebildet ist und in einem zweiten Bereich zwei Federarme 4 und 5 aufweist. Die Federarme 4 und 5 sind durch einen in Richtung einer Längsachse 1 des zylindrischen Körpers verlaufenden Schlitz 6 gebildet. An einem freien Ende 7 des Federarms 4 ist ein Schneidorgan 8 angeordnet. Das Werkzeug 1 weist bei einem Durchmesser d₁ = 4,4 mm eine Gesamtlänge L₁ = 100 mm auf, wobei der Schlitz 6 dann eine Länge von L₆ = 27 mm und eine Höhe H₆ von 1,5 mm besitzt. Das zugehörige Schneidorgan 8 weist eine Länge L₈ von 4 mm und eine Höhe H₈ von 0,45 mm auf. Der Körper 2 weist eine geschlossene Kühlleitung 42 mit einer Kühlöffnung 43 auf.

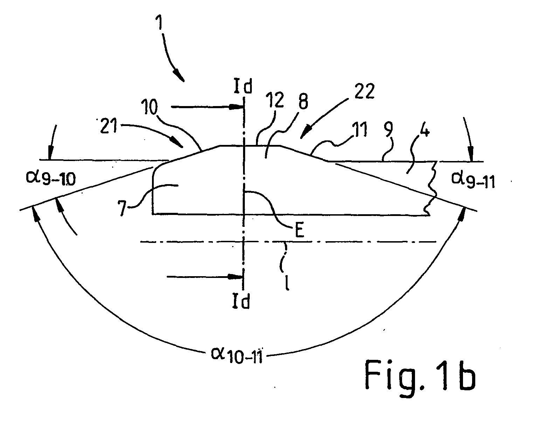

In der Figur 1b ist das in der Figur 1a gezeigte freie Ende 7 des Federarms 4 vergrößert dargestellt. Das Schneidorgan 8 erhebt sich über eine zylindrische Umfangsfläche 9 des Federarms 4 und ist durch zwei Schneidkanten 10 und 11 bzw. durch diese gebildete Schneiden 21 und 22 charakterisiert, welche sich aus der Umfangsfläche 9 zu einer Mantelfläche 12 des Schneidorgans 8 erheben. Die Schneiden 10 und 11 verlaufen zu der Umfangsfläche 9 des Federarms 4 bzw. zu der Längsachse 1 des Werkzeugs 1 mit Winkeln α₉₋₁₀ = α₉₋₁₁ von etwa 15° bis 25°. Zusammen schließen die Schneiden 10 und 11 einen Winkel α₁₀₋₁₁ von etwa 130° bis 150° ein. Anders ausgedrückt stehen die Schneidkanten 10 bzw. 11 schräg zu einer Ebene E, welche senkrecht zu der Längsachse 1 des Werkzeugs 1 verläuft.

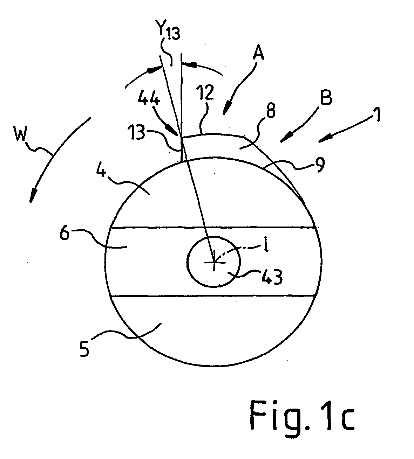

In der Figur 1c ist eine Seitenansicht aus einer Pfeilrichtung Ic auf das in der Figur 1a dargestellte Werkzeug 1 abgebildet. Der Schlitz 6 ist zwischen den Federarmen 4 und 5 symmetrisch zur Längsachse 1 des Werkzeugs 1 angeordnet. In der Seitenansicht weist das Schneidorgan 8 eine nockenähnliche Ausprägung auf.

Entgegen einer Drehrichtung w folgt auf eine stirnseitige Schneidfläche 13 die Mantelfläche 12, welche in einem ersten Abschnitt A mit gleichem oder sich vergrößerndem Abstand zur zylindrischen Umfangsfläche 9 des Federarms 4 verläuft. In einem zweiten Abschnitt B läuft die Mantelfläche 12 wieder auf die Umfangsfläche 9 des Federarms 4 zu und geht in diese über. Die Schneidfläche weist einen negativen Spanwinkel γ₁₃ auf, welcher etwa im Bereich von 4° bis 8° liegt.

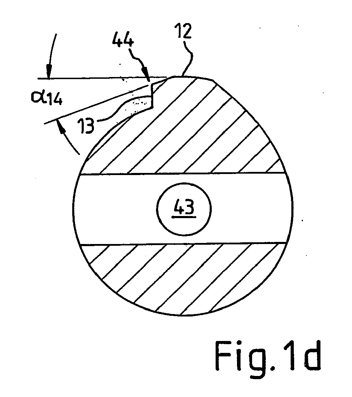

In der Figur 1d ist ein Schnitt entlang der in der Figur 1b dargestellten Schnittlinie Id-Id durch das Werkzeug 1 im Bereich des Schneidorgans 8 dargestellt. Der Übergang von der Schneidfläche 13 in die Mantelfläche 12 erfolgt über eine gebrochene Kante 14, welche vorzugsweise mit einem Winkel α₁₄ von etwa 20° gebrochen ist.

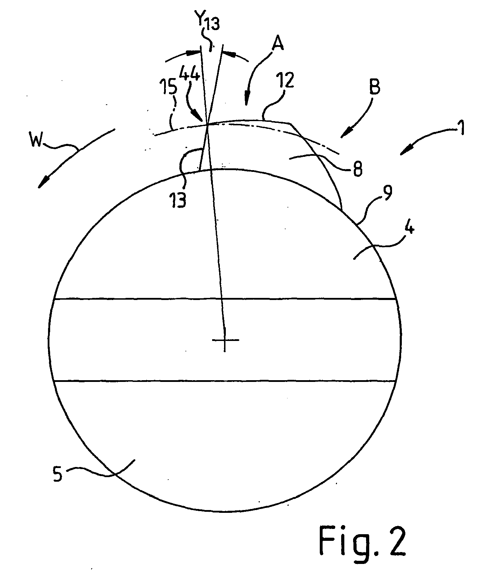

In der Figur 2 ist eine schematische Seitenansicht eines weiteren erfindungsgemäßen Werkzeugs 1 dargestellt. Auf einem Federarm 4 ist ein Schneidorgan 8 angeordnet, das eine Schneidfläche 13 mit einem negativen Spanwinkel γ₁₃ aufweist, der eine Mantelfläche 12 folgt, welche sich in einem ersten Bereich A entgegen einer Drehrichtung w spiralähnlich von einer zylindrischen Umfangsfläche 9 des Federarms 4 entfernt. Zum Vergleich ist ein Kreisbogen 15 dargestellte, welcher äquidistant zur zylindrischen Umfangsfläche 9 der Federgabel 4 verläuft. In einem zweiten Abschnitt B geht das Schneidorgan 8 bogenförmig in die Federgabel 4 über. In dem Bereich A erfolgt die Herstellung der Mantelfläche 12 vorzugsweise durch ein Pendelschleifverfahren, wobei die Mantelfläche 12 durch eine etwa über einen Winkel von 30° verlaufende Hin- und Herbewegung des Werkzeugs 1 und/oder des Schleifwerkzeugs erfolgt.

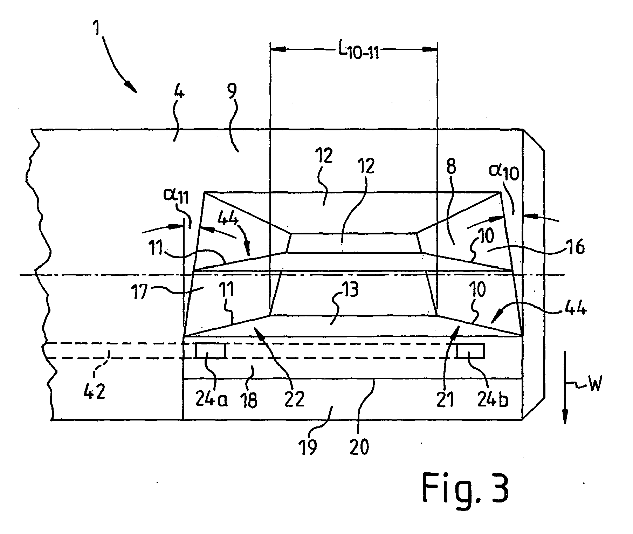

In der Figur 3 ist eine schematische Draufsicht auf ein Schneidorgan 8 dargestellt, welches auf einer Federgabel 4 eines erfindungsgemäßen Werkzeugs 1 angeordnet ist. Das Schneidorgan 8 weist zwei Schneidkanten.10 und 11 auf, die sich aus einer zylindrischen Umfangsfläche 9 der Federgabel 4 zu einer Mantelfläche 12 erheben, wobei die Mantelfläche durch eine zwischen den Schneidkanten 1.0 und 11 liegende Schneidfläche 13 und den Schneidkanten 10 und 11 zugeordneten Freiflächen 16 und 17 angeordnet ist. Entgegen einer Drehrichtung w des Werkzeugs 1 ist der Schneidfläche 13 eine Schlifffläche 18 vorgelagert, welche durch einen Schleifvorgang zur Herstellung der Schneidfläche 13 entsteht. An die Schlifffläche 18 schließt sich eine weitere Schlifffläche 19 an, welche angebracht wird, um einen durch die erste Schlifffläche 18 gebildeten Absatz 20 zu brechen. Zu den Freiflächen 16 bzw. 17 weisen die Schneidkanten 10' bzw. 11 Freiwinkel α₁₀ bzw. α₁₁ auf, welche etwa in einem Bereich von 6° bis 12° liegen und vorzugsweise gleich sind. Durch die Mantelfläche 12 sind die beiden Schneidkanten 10 und 11 bzw. durch diese gebildete Schneiden 21 und 22 voneinander beabstandet, wobei der Abstand L₁₀₋₁₁ bei einem Werkzeug mit einem Durchmesser d₁ = 4,4 mm etwa 1 mm bis 1,5 mm beträgt. Im Bereich der Schneiden 21, 22 mündet eine da's werkzeug 1 durchlaufende Kühlleitung 42 mit Austrittsöffnungen 24a und 24b. Die Kühlleitung 42 verläuft vorzugsweise vom Schaft 3 des Werkzeugs 1 bis in den Bereich des Schneidorgans 8.

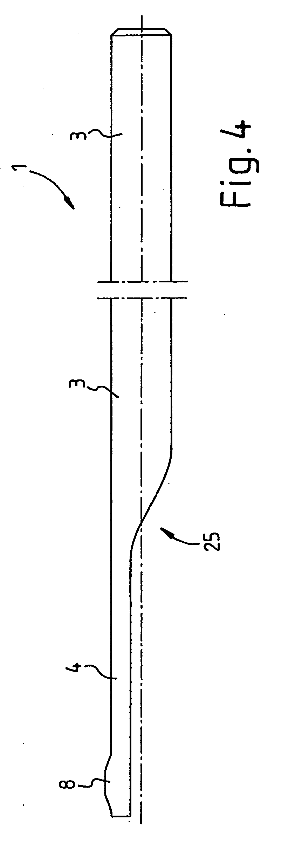

In der Figur 4 ist ein Werkzeug 1 mit einem Federarm 4 dargestellt, auf welchem ein Schneidorgan 8 angeordnet ist. Das Werkzeug 1 ist einteilig aus Hartmetall ausgeführt. Das Werkzeug 1 verjüngt sich in einem Übergangsbereich 25, in welchem ein Schaft 3 in den Federarm 4 übergeht. Die Elastizität des Federarms 4 bzw. das Ausweichvermögen des Schneidorgans 8 sind im wesentlichen durch die Länge des Federarms, die Stärke des Federarms und die Ausgestaltung des Übergangsbereichs 25 bestimmt.

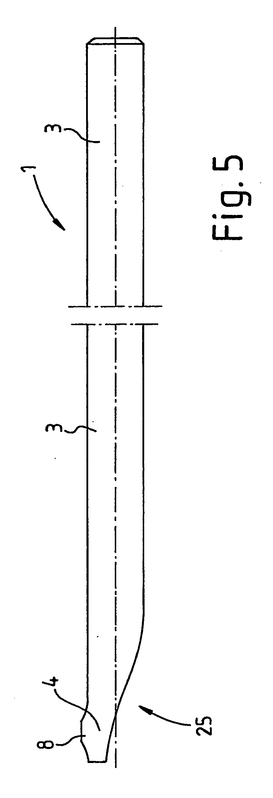

In der Figur 5 ist ein weiteres Werkzeug 1 dargestellt, welches nur einen Federarm 4 aufweist. Der Federarm 4 trägt ein Schneidorgan 8. Gegenüber dem in der Figur 4 dargestellten Werkzeug ist der Federarm 4 stark verkürzt. Ein Übergangsbereich 25 ist ähnlich zu dem in der Figur 4 dargestellten Übergangsbereich ausgeführt.

Beim Entgraten einer Durchgangsbohrung wirkt das erfindungsgemäße Werkzeug in der Weise, dass der Bohrungsanfang mit der Schneidkante 10 entgratet wird und anschließend die im Abschnitt A im Umfang leicht zunehmende Mantelfläche 12 des Schneidorgans im Zusammenwirken mit dem Bohrungsanfang bzw. der Bohrungswandung ein sanftes Einfedern der Federgabel 4 zur Längsachse 1 des Werkzeugs bewirkt, so dass die Schneidkanten außer Eingriff sind. Nach dem Austreten der Mantelfläche des Schneidorgans aus dem Bohrungsende legt sich die Schneidkante 11 an dieses an und entgratet dieses. Beim Zurückziehen des Werkzeugs aus der Bohrung bewirkt die Mantelfläche 12 des Schneidorgans wieder ein sanftes Einfedern der Federgabel 4, so dass das Werkzeug ohne Beschädigung der Wandung der Bohrung zurückgezogen werden kann.

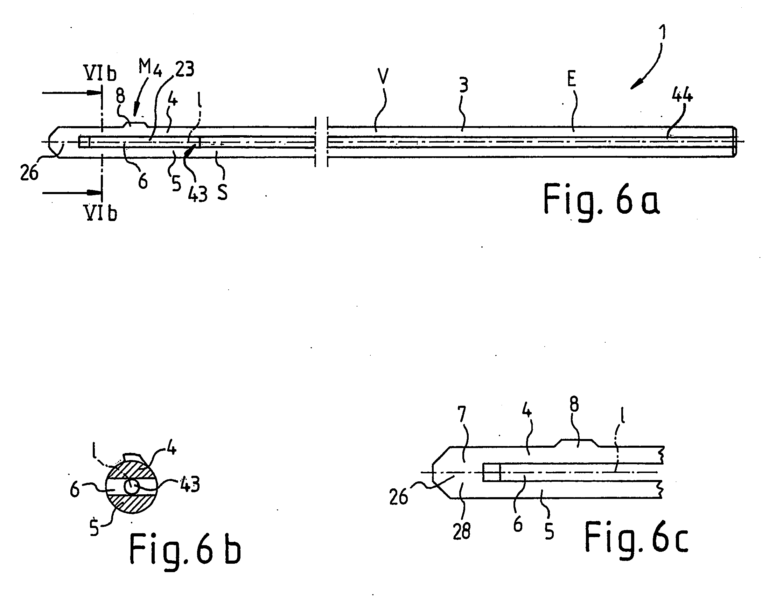

In den Figuren 6a bis 6c sind verschiedene Ansichten eines Werkzeugs 1 dargestellt, bei welchem die Federarme 4 und 5 durch einen Steg 26 an ihren vorderen Enden 7 bzw. 28 verbunden sind. Der Federarm 4 trägt in einem mittleren Bereich M₄, in welchem dieser nicht durch den Steg 26 gegen den zweiten Federarm 5 abgestützt ist, ein Schneidorgan 8. In dem mittleren Bereich M₄, in welchem das Scheidorgan 8 angeordnet ist, ist der Federarm 4 mit dem Schneidorgan 8 zu einer Längsachse 1 des Werkzeugs 1 hin leicht durchbiegbar, da in diesem Bereich zwischen den Federarmen 4 und 5 ein Schlitz 6 angeordnet ist. Das Werkzeug 1 ist dreiteilig ausgebildet und besteht aus einer die Federarme 4 und 5 umfassenden Spitze S, einem Verlängerungsstück V, welches durch einen mittleren Bereich des Schafts 3 gebildet ist, und einem Einspannende E, welches durch einen Endbereich des Schafts 3 gebildet ist. Das Schneidorgan 8 ist im Wesentlichen analog zu dem in der Figur 1b dargestellten und beschriebenen Schneidorgan ausgebildet. Den Schaft 3 durchläuft ein Kühlkanal 23 entlang der Längsachse 1, welcher in den Schlitz 6 mündet. Siehe hierzu insbesondere die Schnittdarstellung Figur 6b (zur besseren Übersichtlichkeit sind geschnittene Flächen nicht schraffiert).

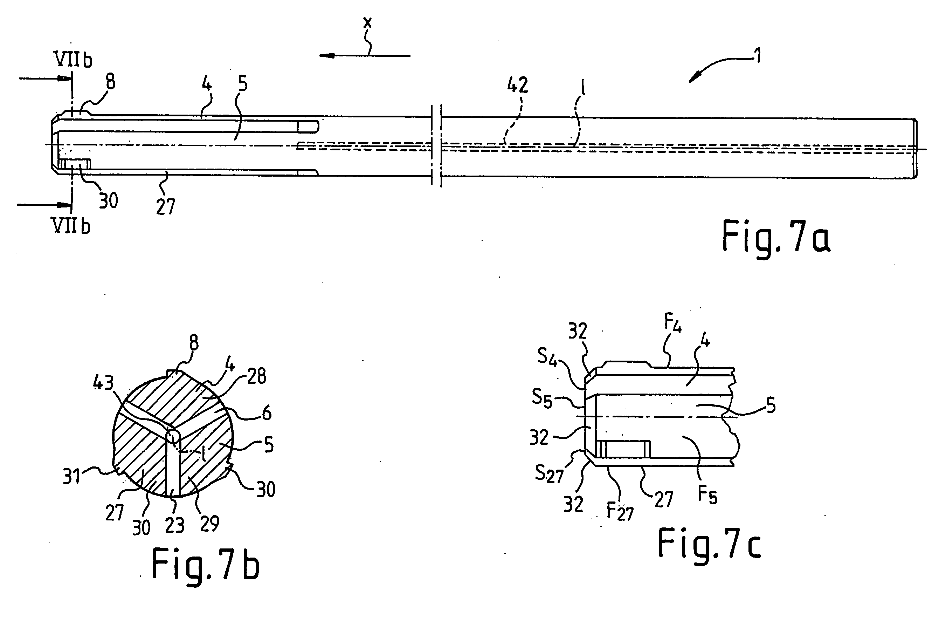

In den Figuren 7a bis 7c sind verschiedene Ansichten eines weiteren Werkzeugs 1 dargestellt, welches drei frei schwingende Federarme 4, 5 und 27 aufweist. Freie Enden 7, 28 und 29 der Federarme 4, 5 und 27 weisen in eine Vorschubrichtung x des Werkzeugs 1. Die Federarme 4, 5 und 27 sind durch einen im Querschnitt Y-förmigen Schlitz 6 voneinander getrennt. Dieser lässt ein Einfedern der freien Enden 7, 28 und 29 der Federarme 4, 5 und 27 in Richtung einer Längsachse 1 des Werkzeugs 1 zu. Jeder Federarm 4, 5 und 27 weist jeweils ein Schneidorgan 8, 30 bzw. 31 auf. Die Schneidorgane 8, 30 und 31 sind gleichmäßig über den Umfang des Werkzeugs 1 verteilt. An den freien Enden 7, 28 und 29 gehen Mantelflächen F₄, F₅ und F₂₇ der Federarme 4, 5 und 27 jeweils über eine Fase 32 in Stirnflächen S₄, S₅ bzw. S₂₇ über. Die Schneidorgane 8, 30 und 31 sind im wesentlichen entsprechend dem in der Figur 1b dargestellten und beschriebenen Scheidorgan ausgebildet. Das Werkzeug 1 weist einen Kühlkanal 23 auf, welche in den Y-förmigen Schlitz 6 mündet.

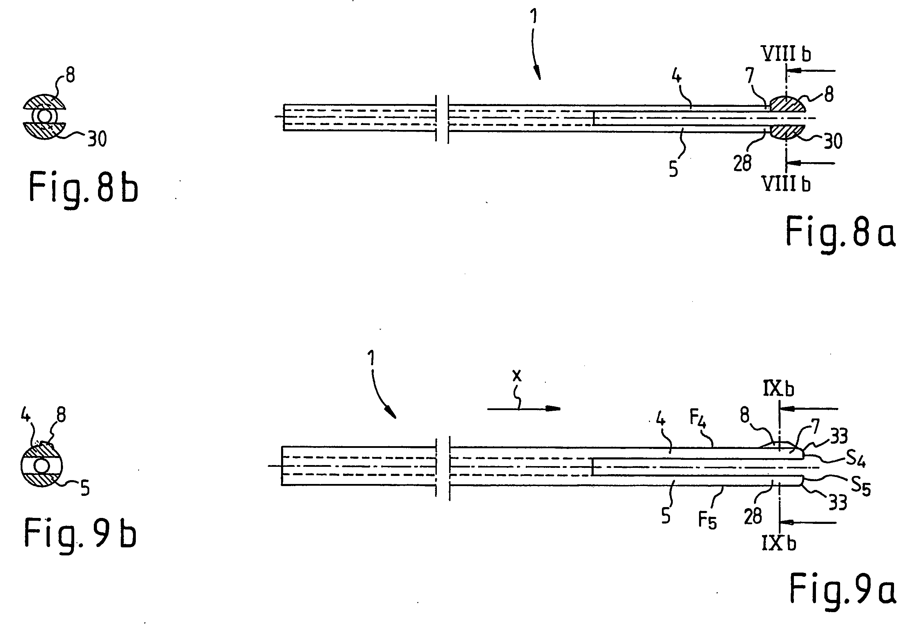

In den Figuren 8a und 8b ist ein Werkzeug 1 mit zwei Federarmen 4 und 5 dargestellt, welche an freien Enden 7 und 28 jeweils ein teilkugelförmiges Schneidorgan 8 bzw. 30 tragen.

In den Figuren 9a und 9b ist ein Werkzeug 1 mit zwei Federarmen 4 und 5 dargestellt, welche mit freien Enden 7 und 28 in eine Vorschubrichtung x des Werkzeugs 1 weisen. Der Federarm 4 trägt ein Schneidorgan 8. Die Federarme 4 und 5 weisen Mantelflächen F₄ und F₅ auf, welche über Radien 33 in Stirnflächen S₄ und S₅ übergehen.

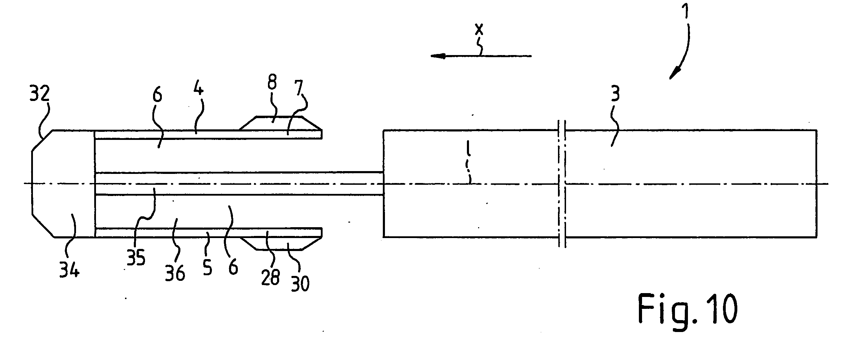

In der Figur 10 ist ein Werkzeug 1 dargestellt, bei welchem Federarme 4 und 5 mit freien Enden 7 und 28 entgegen einer Vorschubrichtung x ausgerichtet sind. Die Federarme 4 und 5 sind an einem Kopf 34 angeformt, welcher über einen Hals 35 mit einem Schaft 3 in Verbindung steht. Zwischen den Federarmen 4 und 5 und dem Hals 35 besteht in Form von Schlitzen 6 ein Freiraum 36, welcher ein Einfedern der Federarme 4 und 5 in Richtung einer Längsachse 1 des Werkzeugs 1 zulässt. Im Bereich der freien Enden 7 und 28 der Federarme 4 und 5 ist jeweils ein Schneidorgan 8 bzw. 30 angeordnet. Der Kopf 34 des Werkzeugs 1 weist ähnlich wie in Vorschubrichtung weisende Federarme anderer Werkzeuge eine Fase 32 auf.

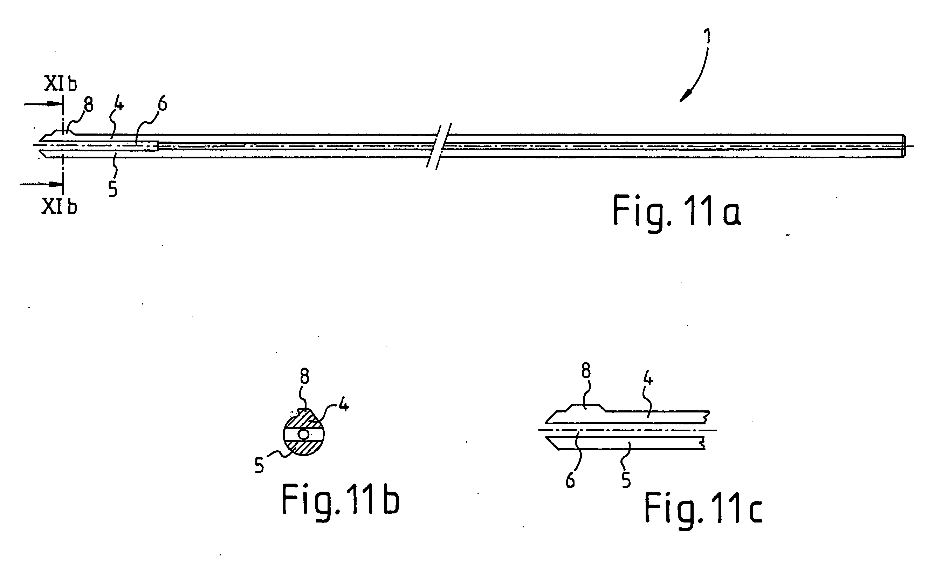

Die Figuren 11a und 11b zeigen Ansichten eines weiteren Werkzeugs 1, welches zwei frei schwingende Federarme 4 und 5 aufweist, die durch einen Schlitz 6 voneinander beabstandet sind. Lediglich der Federarm 4 trägt ein Schneidorgan 8. In der Figur 12a ist ein Teil eines Werkzeugs 1 schematisch dargestellt, bei welchem eine Spitze S mittels einer Passung 37 mit einem Verlängerungsstück V verbunden ist. Hierzu weist sie Spitze S einen Stift 38 auf, welcher mit Presssitz in einer Bohrung 39 des Verlängerungsstücks V sitzt. Gemäß einer nicht dargestellten Ausführungsvariante ist es vorgesehen, den Zusammenhalt zwischen der Spitze und dem Verlängerungsstück durch eine Klemmschraube zu sichern, welche in einer Gewindebohrung im Verlängerungsstück sitzt.

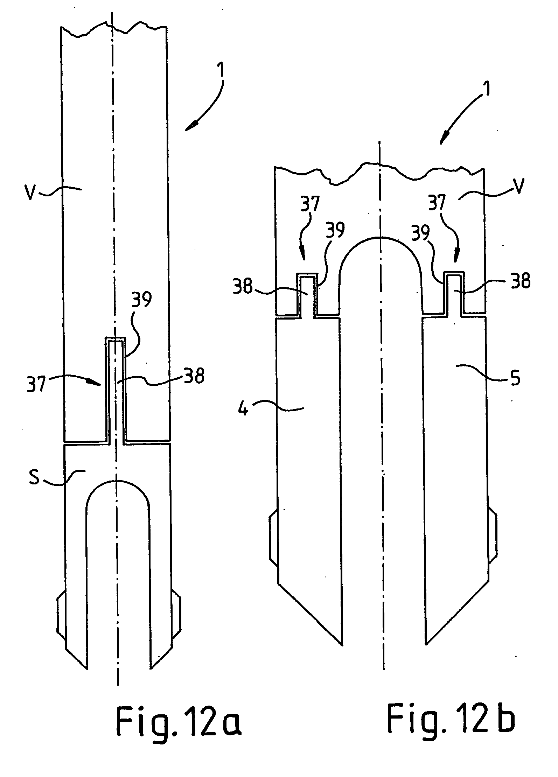

In der Figur 12b ist ein Teil eines weiteren Werkzeugs 1 schematisch dargestellt. Bei dem Werkzeug 1 sind die Federarme 4 und 5 über Passungen 37 an einem Verlängerungsstück V angeordnet. Hierzu ist an den Federarmen 4 und 5 jeweils ein Stift 38 angeformt, welcher jeweils in einer Bohrung 39 des Verlängerungsstücks V sitzt. Diese Konstruktion erlaubt auch den Austausch eines einzelnen defekten Federarms. Gemäß einer nicht dargestellten Ausführungsvariante ist insbesondere auch die Verwendung eines Klemmkonus zur Verbindung der einzelnen Teile vorgesehen.

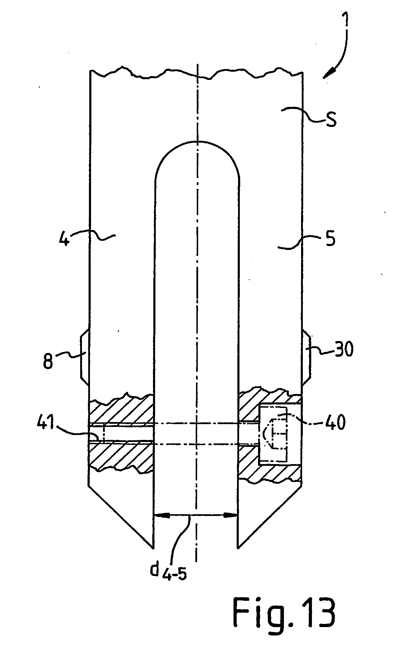

Die Figur 13 zeigt eine schematische Ansicht einer Spitze S eines Werkzeugs 1. Das Werkzeug 1 weist zwei Federarme 4 und 5 auf, welche Schneidorgane 8, 30 tragen. Die Federarme 4 und 5 sind statt durch einen Steg (siehe Figur 6a bis 6c) durch eine Schraube (40) verbunden, welche in eine im Federarm 4 angeordnete Gewindebohrung 41 eingeschraubt ist. Mittels der Schraube 40 ist der Abstand d₄₋₅ zwischen den Federarmen 4 und 5 einstellbar, so dass eine Einstellung des Wirkdurchmessers des Werkzeugs 1 möglich ist.

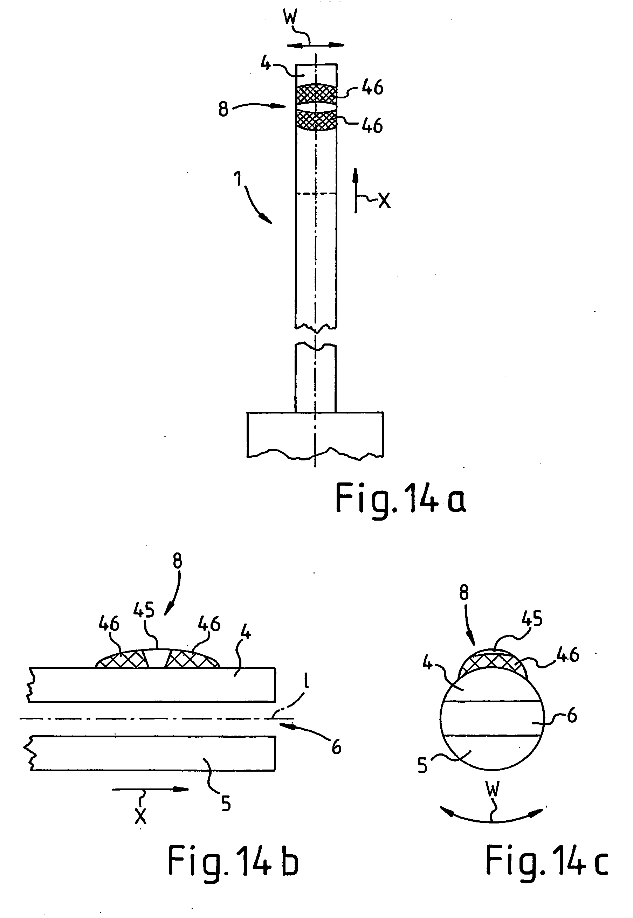

In Figur 14 sind verschiedene Ansichten, insbesondere Detaildarstellungen, einer weiteren Entgratgabel aufgeführt. Bei dieser Variante der Erfindung weist das Schneidorgan 8 zwei zahlreiche Schneidkanten umfassende Schneidflächen 46 auf, zwischen denen eine Gleitfläche 45 ohne Schneidkanten angeordnet ist. Die zahlreichen Schneidkanten sind in Figur 14 aus Gründen der Übersichtlichkeit nicht näher beschriftet. Die Schneidkanten entsprechen im Wesentlichen der dargestellten Kreuzschraffur, d.h. bei dieser Variante der Erfindung sind im Wesentlichen sich senkrecht kreuzende Schneidkanten vorhanden. Demzufolge sind in Dreh- bzw.

Schneidrichtung w mehrere Schneidkanten hintereinander angeordnet. Entsprechend sind zudem auch mehrere Schneidkanten in Vorschubrichtung x bzw. in die hierzu entgegengesetzte Richtung angeordnet.

Die Schneidflächen 46 des Schneidorgans 8 gemäß Figur 14 sind als gewölbte bzw. gebogene Mantelflächen 46 des Schneidorgans 8 ausgebildet. Die der Stirnseite des Werkzeugs am nächsten liegende Mantelfläche 46 ist in Vorschubrichtung x ausgerichtet, so dass ein Entgraten einer Bohrung beim Verstellen des Werkzeugs in Vorschubrichtung x vorteilhaft realisiert wird. Die Mantelfläche 46 erstreckt sich über einen Radialbereich mit unterschiedlichsten Radien, so dass auch leichte Unrundheiten der Bohrung bzw. des Grates zu keiner Beeinträchtigung des Entgratvorgangs führen können.

Die der Stirnseite des Werkzeugs abgewandte Mantelfläche 46 ist in Richtung des Schafts ausgerichtet bzw. entgegen der Vorschubrichtung x, so dass ein Entgraten der Bohrung bei einem Verstellen entgegen der Vorschubrichtung x realisierbar ist.

Figur 14c verdeutlicht insbesondere, dass die Gleitfläche 45 radial über die Schneidflächen 46 vorsteht. Hierdurch wird erreicht, dass beim Durchstoßen durch die Bohrung die Mantelfläche der Bohrung nicht beeinträchtigt wird. Beim Durchstoßen durch die Bohrung wird insbesondere der federelastische Federarm 4 in Richtung zur Drehachse 1 bewegt bzw. verbogen. Nach dem Durchstoßen der Bohrung bewegt sich der Federarm 4 wieder in seine ursprüngliche Ausgangslage bzw. Ruhelage zurück, so dass das Werkzeug mit Hilfe der Mantelfläche 46, die zum Schaft hin ausgerichtet ist, die Rückseite des Werkstücks entgraten kann.

In Figur 14 ist eine Entgratgabel 1 mit einem Schneidenträger bzw. Federarm 4 dargestellt, der ein Schneidorgan 8 aufweist.

Der zweite in Figur 14 dargestellte Federarm 5 weist bei dieser Variante der Erfindung kein Schneidorgan auf. Ohne nähere Darstellung kann der Federarm 5 auch als Schneidenträger mit Schneidorgan 8 ausgebildet werden. Das nicht näher dargestellte Schneidorgan des Arms bzw. Trägers 5 könnte entsprechend dem in Figur 14 dargestellten Schneidorgan 8 verwirklicht werden.

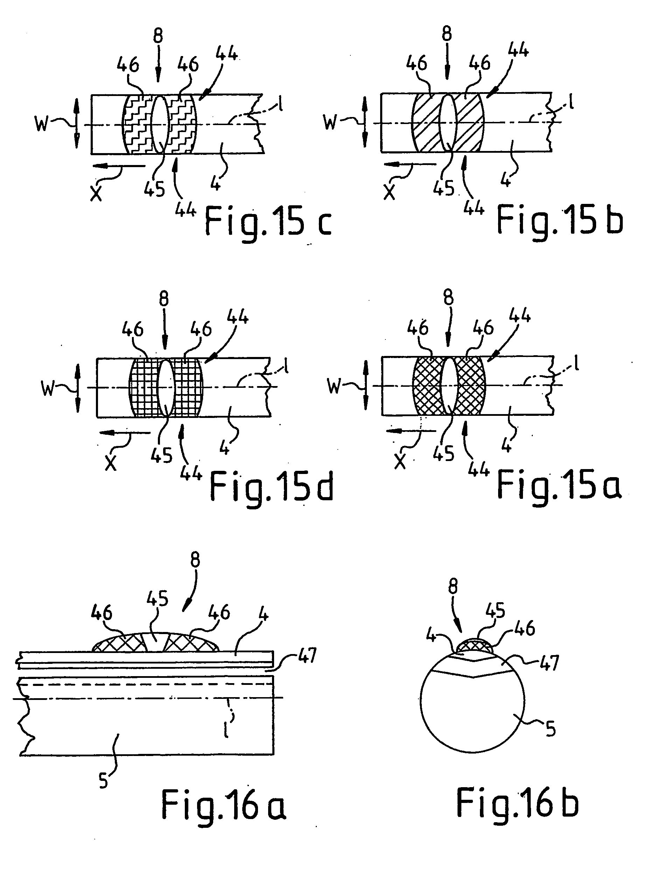

In Figur 15 sind mehrere Varianten von Schneidkantenanordnungen gemäß der Erfindung dargestellt. Figur 15a entspricht im Wesentlichen der variante gemäß Figur 14. In Figur 15b sind mehrere im Wesentlichen parallel zueinander und im Winkel zur Drehachse 1 ausgerichtete Schneidkanten 44 dargestellt. Die Schneidkanten 44 weisen unterschiedliche Abstände auf. Aufgrund der schrägen bzw. winkligen Ausrichtung der Schneidkanten 44 sind diese sowohl in Schneid- bzw. Drehrichtung w als auch in Vorschubrichtung x hintereinander angeordnet.

In Figur 15c ist ein Schneidorgan 8 gemäß der Erfindung dargestellt, das ebenfalls mehrere Schneidkanten 44 je Mantelfläche 46 aufweist. Die Schneidkanten 44 gemäß Figur 15c weisen einen zackigen Verlauf auf, wobei Abschnitte vorgesehen sind, die in Richtung der Drehachse 1 bzw. der Vorschubrichtung x ausgerichtet sind und Schneidabschnitte vorgesehen sind, die in Schneid- bzw. Drehrichtung w ausgerichtet sind. Dementsprechend sind auch bei dieser Variante der Erfindung mehrere Schneidkanten 44 bzw. Schneidabschnitte der Schneidkanten 44 sowohl in Schneid- bzw. Drehrichtung als auch in Vorschubrichtung x hintereinander angeordnet.

In Figur 15d sind mehrere Schneidkanten 44 des Schneidorgans 8 auf einer Mantelfläche 46 derart angeordnet, dass diese sich im Wesentlichen senkrecht kreuzen. Die Schneidkanten 44 gemäß Figur 15d sind im Unterschied zu der Variante gemäß Figur 15a nicht schräg bezüglich der Drehachse 1, sondern teilweise in Richtung der Drehachse 1 und teilweise in Schneid- bzw. Drehrichtung w ausgerichtet. Dementsprechend sind auch bei dieser Variante der Erfindung mehrere Schneidkanten sowohl in Richtung der Drehachse 1 als auch quer zur Richtung der Drehachse 1 hintereinander angeordnet.

In Figur 16 sind zwei Detaildarstellungen einer Ausführungsform gemäß der Erfindung aufgeführt, wobei ein Schlitz 47 nicht wie bei dem Ausführungsbeispiel gemäß Figur 14 mittig bzw. im Bereich der Drehachse 1, sonder außenmittig angeordnet ist. Darüber hinaus ist der Schlitz 47 im Gegensatz zum Schlitz 6 gemäß Figur 14 nicht gerade, sondern geknickt ausgebildet. D.h. eine Mantelfläche des Schlitzes 47 weist in der Stirnseitendarstellung gemäß Figur 16b eine keilförmige Kontur auf. Ein entsprechend keilförmiger Schlitz 47 wird beispielsweise bei einem Hartmetallwerkzeug derart hergestellt, dass jeweils von einer Seite bis etwa zur Mitte der Schlitz 47 ausgeschliffen wird und anschließend von der anderen Seite entsprechend winkelig die zweite Hälfte des Schlitzes 47 ausgeschliffen wird. Hierbei ist von Vorteil, dass man das Schleifwerkzeug in vorteilhafter Weise am Werkzeug ansetzten kann. Andererseits kann gemäß dieser Variante der Erfindung der Federarm 4 vergleichsweise kompakt ausgebildet werden.

Die außenmittige Anordnung des Schlitzes weist den Vorteil auf, dass gerade bei größeren Durchmessern des Grundkörpers ein vergleichsweise gut federelastischer Federarm 4 bzw. Schneidenträger 4 realisierbar ist. Der Federarm 5 gemäß Figur 16 ist nahezu nicht federelastisch bei Durchmessern des Grundkörpers von etwa 20 mm. Darüber hinaus wird bei dieser Variante des Schlitzes 47 gerade bei großen Durchmessern des Werkzeugs relativ wenig Material zur Herstellung des Schlitzes 47 entfernt. Dies verringert den Herstellungsaufwand als auch die Kosten für das Werkzeug.

Vor allem bei vergleichsweise großen Durchmessern könnten auch mehrere außermittige Schlitze 47 in der Weise vorgesehen werden, dass mehrere, relativ gut federelastische Federarme 4 mit Schneidorganen 8 auf dem Umfang des Grundkörpers verteilt angeordnet sind. Beispielsweise können in vorteilhafter Weise insgesamt drei Federarme 4 mit jeweils einem Schneidorgan 8 im Winkel von etwa 120 Grad zueinander angeordnet werden. Hierbei ist eine besonders gleichmäßige Belastung des Werkzeugs beim Entgraten realisierbar.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung Werkzeuge mit Durchmessern d₁ von etwa 2 mm bis 20 mm oder größer vor. In diesem Durchmesserbereich sind Schlitzlängen L₆ von etwa 6 mm bis 35 mm vorgesehen, wobei bei hartem Material eher kürzere und bei weichem Material eher längere Schlitzlängen L₆ vorgesehen sind, um den Anpressdruck der Schneidkanten auf das zu bearbeitende Material richtig abzustimmen. Erfindungsgemäß finden neben Hartmetallen auch die Werkstoffe PKD und CBN Verwendung zur Herstellung des Scheidorgans, des Federarms und des Schafts.

### Bezugszeichenliste:

- 1: Werkzeug (Entgratgabel)
- 2: zylindrischer Körper
- 3: Schaft
- 4, 5: erster Federarm, zweiter Federarm
- 6: Schlitz
- 7: freies bzw. vorderes Ende von 4
- 8: Schneidorgan
- 9: zylindrische Umfangsfläche von 4
- 10, 11: Schneidkante
- 12: Mantelfläche von 8
- 13: Schneidfläche
- 14: Kante zwischen 12 und 13
- 15: Kreisbogen
- 16, 17: Freifläche bei 10, Freifläche bei 11
- 18, 19: erste Schlifffläche, zweite Schlifffläche
- 20: Absatz
- 21, 22: erste Schneide, zweite Schneide
- 23: Kühlkanal
- 24: Austrittsöffnung von 23
- 25: Übergangsbereich von 3 auf 4
- 26: Steg
- 27: dritter Federarm
- 28: freies bzw. vorderes Ende von 5
- 29: freies bzw. vorderes Ende von 27
- 30: zweites Schneidorgan
- 31: drittes Schneidorgan
- 32: Fase
- 33: Radius
- 34: Kopf
- 35: Hals
- 36: Freiraum
- 37: Passung
- 38: Stift
- 39: Bohrung
- 40: Schraube
- 41: Gewindebohrung
- 42: Kühlleitung
- 43: Kühlöffnung
- 44: Schneidkante
- 45: Gleitfläche
- 46: Schneidfläche
- 47: Schlitz

- l: Längsachse von 1
- d₁: Durchmesser von 1
- d₄₋₅: Abstand zwischen 4 und 5
- x: Vorschubrichtung von 1
- L₁: Länge von 1
- L₆: Länge von 6
- L₆: Länge von 8
- H₈: Höhe von 8
- α₉₋₁₀: Winkel zwischen 9 und 10
- α₉₋₁₁: Winkel zwischen 9 und 11
- α₁₀₋₁₁: Winkel zwischen 10 und 11
- w: Drehrichtung von 1
- A, B: erster Abschnitt von 12, zweiter Abschnitt von 12
- E: Ebene senkrecht zu 1
- γ₁₃: negativer Spanwinkel von 13
- α₁₀, α₁₁: Freiwinkel bei 10, Freiwinkel bei 11
- S: Spitze von 1
- V: Verlängerungsstück
- E: Einspannende
- F₄: Mantelfläche von 4
- F₅: Mantelfläche von 5
- F₂₇: Mantelfläche von 27
- M₄: mittlerer Bereich von 4
- S₄: Stirnfläche von 4
- S₅: Stirnfläche von 5
- S₂₇: Stirnfläche von 27

## Patentansprüche

1. Werkzeug zum Entgraten von Bohrungen mit einem Grundkörper (2) mit einem Einspannschaft (3) und mindestens einem gegenüber dem Grundkörper (2) federelastisch bewegbaren Schneidenträger (4, 5), wobei der Schneidenträger (4, 5) wenigstens ein radial in Bezug auf eine Drehachse des Werkzeugs hervorstehendes Schneidelement (8, 30, 31) mit mindestens einer Schneide (21, 22) aufweist, die eine wenigstens teilweise quer zu einer Drehrichtung ausgerichtete Schneidenvorderkante (44) umfasst, wobei das Schneidelement (8, 30, 31) aus Hartmetall besteht, **dadurch gekennzeichnet, dass** das Werkzeug (1) vollständig aus Hartmetall besteht.

2. Werkzeug nach Anspruch 1, **dadurch gekennzeichnet, dass** wenigstens zwei Schneiden (21, 22) vorgesehen sind.

3. Werkzeug nach einem der vorhergehenden Ansprüche, **dadurch gekennzeichnet, dass** das Werkzeug (1) wenigstens zwei Schneidenträger (4, 5) aufweist.

4. Werkzeug nach einem der vorhergehenden Ansprüche, **dadurch gekennzeichnet, dass** wenigstens eine Kühlvorrichtung (23) zum Kühlen des Werkzeugs vorgesehen ist.

5. Werkzeug nach einem der vorhergehenden Ansprüche, **dadurch gekennzeichnet, dass** eine Kühlleitung (42) der Kühlvorrichtung (23) im Bereich des Schneidelementes (8, 30, 31) wenigstens eine Austrittsöffnung (24a, 24b) umfasst.

6. Werkzeug nach einem der vorhergehenden Ansprüche, **dadurch gekennzeichnet, dass** der Schneidenträger (4, 5, 27) am Schaft (3) des Werkzeugs (1) fixiert ist.

7. Werkzeug nach einem der vorhergehenden Ansprüche, **dadurch gekennzeichnet, dass** der Schneidenträger mit einer Hartstoffschicht beschichtet ist.

8. Werkzeug nach einem der vorhergehenden Ansprüche, **dadurch gekennzeichnet, dass** die Schneidenvorderkanten in Bezug zur Drehachse.schräg oder wendelförmig angeordnet sind.

9. Werkzeug nach Anspruch 1, **dadurch gekennzeichnet, dass** mindestens zwei für die Drehrichtung ausgebildete Schneidenvorderkanten des Schneidelements wenigstens teilweise in Drehrichtung hintereinander angeordnet sind.

10. Werkzeug nach einem der vorgenannten Ansprüche, **dadurch gekennzeichnet, dass** mindestens ein Schneidabschnitt einer der Schneidenvorderkanten wenigstens teilweise längs der Drehrichtung ausgerichtet ist.

11. Werkzeug nach einem der vorgenannten Ansprüche, **dadurch gekennzeichnet, dass** Schneidenvorderkanten im Wesentlichen in einem spitzen Schneidwinkel zur Drehrichtung ausgerichtet sind.

12. Werkzeug nach einem der vorgenannten Ansprüche, **dadurch gekennzeichnet, dass** ein sich kreuzender Verlauf der Schneiden vorgesehen ist.

13. Werkzeug nach einem der vorgenannten Ansprüche, **dadurch gekennzeichnet, dass** Schneidenvorderkanten wenigstens teilweise in Richtung des Schaftes ausgerichtet sind.

14. Werkzeug nach einem der vorgenannten Ansprüche, **dadurch gekennzeichnet, dass** Schneiden wenigstens teilweise auf einem gebogenen Mantelabschnitt des Schneidelementes angeordnet sind.

15. Werkzeug nach einem der vorgenannten Ansprüche, **dadurch gekennzeichnet, dass** eine Vielzahl von wenigstens teilweise in Drehrichtung hintereinander angeordneter Schneidenvorderkanten vorgesehen sind.

16. Werkzeug nach einem der vorgenannten Ansprüche, **dadurch gekennzeichnet, dass** eine Vielzahl von wenigstens teilweise quer zur Drehrichtung hintereinander angeordneter Schneidenvorderkanten vorgesehen sind.

17. Werkzeug nach einem der vorgenannten Ansprüche, **dadurch gekennzeichnet, dass** ein radial in Bezug auf die Drehachse hervorstehender Gleitbereich des Schneidelementes zum Gleiten in der Bohrung vorgesehen ist.

18. Werkzeug nach einem der vorgenannten Ansprüche, **dadurch gekennzeichnet, dass** der Gleitbereich zwischen zwei gebogenen, Schneidenvorderkanten aufweisenden Mantelabschnitten angeordnet ist.

## Claims

1. Tool for deburring bores with a main body (2) with a clamping shaft (3) and at least one blade carrier (4, 5) that is moveable in a spring-resilient manner relative to the main body (2), wherein the blade carrier (4, 5) comprises at least one cutting element (8, 30, 31) projecting radially in relation to a rotational axis of the tool with at least one blade (21, 22), which comprises a blade front edge (44) aligned at least partly perpendicular to one direction of rotation, wherein the cutting element (8, 30, 31) is made from hard metal, **characterised in that** the tool (1) is made entirely from hard metal.

2. Tool according to claim 1, **characterised in that** at least two blades (21, 22) are provided.

3. Tool according to one of the preceding claims, **characterised in that** the tool (1) comprises at least two blade carriers (4, 5).

4. Tool according to one of the preceding claims, **characterised in that** at least one cooling device (23) is provided for cooling the tool.

5. Tool according to one of the preceding claims, **characterised in that** a cooling line (42) of the cooling device (23) in the region of the cutting element (8, 30, 31) comprises at least one outlet opening (24a, 24b).

6. Tool according to one of the preceding claims, **characterised in that** the blade carrier (4, 5, 27) is fixed onto the shaft (3) of the tool (1).

7. Tool according to one of the preceding claims, **characterised in that** the blade carrier is coated with a layer of hard material.

8. Tool according to one of the preceding claims, **characterised in that** the blade front edges are arranged obliquely in relation to the axis of rotation or in helical formation.

9. Tool according to claim 1, **characterised in that** at least two blade front edges of the cutting element designed for the direction of rotation are arranged behind one another at least party in the direction of rotation.

10. Tool according to one of the preceding claims, **characterised in that** at least one cutting section of one of the blade front edges is aligned at least partly along the direction of rotation.

11. Tool according to one of the preceding claims, **characterised in that** the blade front edges are aligned essentially at an acute cutting angle relative to the direction of rotation.

12. Tool according to one of the preceding claims, **characterised in that** the blades move in a crosswise direction.

13. Tool according to one of the preceding claims, **characterised in that** the blade front edges are aligned at least partly in the direction of the shaft.

14. Tool according to one of the preceding claims, **characterised in that** blades are arranged at least partly on a curved casing section of the cutting element.

15. Tool according to one of the preceding claims, **characterised in that** a plurality of blade front edges are provided arranged behind one another at least partly in rotational direction.

16. Tool according to one of the preceding claims, **characterised in that** a plurality of blade front edges are provided arranged behind one another at least partly perpendicular to the direction of rotation.

17. Tool according to one of the preceding claims, **characterised in that** a sliding area of the cutting element projecting radially relative to the axis of rotation is provided for sliding in the bore.

18. Tool according to one of the preceding claims, **characterised in that** the sliding area is arranged between two curved casing sections with blade front edges.

## Revendications

1. Outil destiné à l'ébavurage de perçages, comportant un corps de base (2), un fût de serrage (3) et au moins un porte-lame (4, 5) pouvant être déplacé élastiquement par rapport au corps de base (2), le porte-lame (4, 5) étant pourvu d'au moins un élément tranchant (8, 30, 31), qui dépasse radialement par rapport à un axe de rotation de l'outil et comporte au moins un tranchant (21, 22), lequel est doté d'une arête tranchante avant (44) qui est orientée, au moins en partie, transversalement à un sens de rotation, l'élément tranchant (8, 30, 31) étant en métal dur, **caractérisé en ce que** l'outil (1) est entièrement en métal dur.

2. Outil selon la revendication 1, **caractérisé en ce qu'**il est prévu au moins deux tranchants (21, 22).

3. Outil selon l'une des revendications précédentes, **caractérisé en ce que** l'outil (1) comporte au moins deux porte-lames (4, 5).

4. Outil selon l'une des revendications précédentes, **caractérisé en ce qu'**il est prévu au moins un dispositif de refroidissement (23) pour le refroidissement de l'outil.

5. Outil selon l'une des revendications précédentes, **caractérisé en ce qu'**une conduite de refroidissement (42) du dispositif de refroidissement (23) comporte au moins un orifice de sortie (24a, 24b) dans la zone de l'élément tranchant (8, 30, 31).

6. Outil selon l'une des revendications précédentes, **caractérisé en ce que** le porte-lame (4, 5, 27) est fixé au fût (3) de l'outil (1).

7. Outil selon l'une des revendications précédentes, **caractérisé en ce que** le porte-lame est revêtu d'une couche en matière dure.

8. Outil selon l'une des revendications précédentes, **caractérisé en ce que** les arêtes tranchantes avant sont disposées obliquement ou de façon hélicoïdale par rapport à l'axe de rotation.

9. Outil selon la revendication 1, **caractérisé en ce qu'**au moins deux arêtes tranchantes avant de l'élément tranchant, agencées pour le sens de rotation, sont disposées au moins partiellement l'une derrière l'autre dans le sens de rotation.

10. Outil selon l'une des revendications précédentes, **caractérisé en ce qu'**au moins un tronçon tranchant de l'une des arêtes tranchantes avant est orienté, au moins partiellement, le long du sens de rotation.

11. Outil selon l'une des revendications précédentes, **caractérisé en ce que** les arêtes tranchantes avant sont pour l'essentiel orientées suivant un angle de coupe aigu par rapport au sens de rotation.

12. Outil selon l'une des revendications précédentes, **caractérisé en ce qu'**il est prévu une extension croisée des tranchants.

13. Outil selon l'une des revendications précédentes, **caractérisé en ce que** les arêtes tranchantes avant sont orientées, au moins partiellement, en direction du fût.

14. Outil selon l'une des revendications précédentes, **caractérisé en ce que** les tranchants sont disposés, au moins partiellement, sur un tronçon d'enveloppe cintré de l'élément tranchant.

15. Outil selon l'une des revendications précédentes, **caractérisé en ce qu'**il est prévu une pluralité d'arêtes tranchantes avant disposées, au moins partiellement, les unes derrière les autres dans le sens de rotation.

16. Outil selon l'une des revendications précédentes, **caractérisé en ce qu'**il est prévu une pluralité d'arêtes tranchantes avant disposées, au moins partiellement, les unes derrière les autres transversalement au sens de rotation.

17. Outil selon l'une des revendications précédentes, **caractérisé en ce qu'**une zone de glissement de l'élément tranchant, qui dépasse radialement par rapport à l'axe de rotation., est prévue pour le glissement dans le perçage.

18. Outil selon l'une des revendications précédentes, **caractérisé en ce que** la zone de glissement est positionnée entre deux tronçons d'enveloppe cintrés dotés d'arêtes tranchantes avant.
